# EUROPÄISCHE PATENTSCHRIFT

(11) **EP 3 099 528 B1**
(45) Veröffentlichungstag und Bekanntmachung des Hinweises auf die Patenterteilung: **21.03.2018**
(21) Anmeldenummer: 15707288.5
(22) Anmeldetag: 28.01.2015
(51) Int. Cl.: H05B 3/34, B60N 2/56, B60N 3/04, H05B 3/36

(54) **HEIZANORDNUNG FÜR EIN KRAFTFAHRZEUG, HEIZELEMENT FÜR EINE SOLCHE HEIZANORDNUNG UND VERFAHREN ZUR HERSTELLUNG EINES HEIZELEMENTES**
HEATING SYSTEM FOR A MOTOR VEHICLE, HEATING ELEMENT FOR SUCH A HEATING SYSTEM, AND METHOD FOR PRODUCING A HEATING ELEMENT
SYSTÈME DE CHAUFFAGE POUR VÉHICULE AUTOMOBILE, ÉLÉMENT CHAUFFANT POUR LEDIT SYSTÈME DE CHAUFFAGE ET PROCÉDÉ DE FABRICATION D'UN ÉLÉMENT CHAUFFANT

(30) Priorität: 29.01.2014 DE 102014201569; 07.08.2014 DE 102014215666; 22.08.2014 DE 202014103928 U
(43) Veröffentlichungstag der Anmeldung: 07.12.2016
(73) Patentinhaber: LEONI Bordnetz-Systeme GmbH, 97318 Kitzingen (DE)
(72) Erfinder: LANGHOFF, Wolfgang, 71229 Leonberg (DE); NACHTRAB, Johannes, 91575 Windsbach (DE); WOLF, Sascha, 96050 Bamberg (DE)
(74) Vertreter: FDST Patentanwälte
(86) Internationale Anmeldenummer: PCT/EP2015/051738
(87) Internationale Veröffentlichungsnummer: WO 2015/114022

(56) Entgegenhaltungen:
- WO-A2-2004/105440
- DE-U1- 20 100 146
- DE-U1-202013 003 491
- FR-A1- 2 864 486
- JP-A- H0 450 035
- JP-A- 2011 102 657
- US-A1- 2009 289 045
- US-B1- 6 897 417

## Beschreibung

Die Erfindung betrifft eine Heizanordnung für ein Kraftfahrzeug , sowie ein Heizelement für eine solche Heizanordnung.

Zur Erhöhung des Komforts, insbesondere bei niedrigen Außentemperaturen, werden in Kraftfahrzeugen häufig verschiedene Heizanordnungen integriert, die über ein oder mehrere Heizelemente Wärme erzeugen. Zusätzlich zu einer typischerweise vorhandenen und durch Motorabwärme betriebenen Heizung sind weitere Heizanordnungen verfügbar. Solche zusätzlichen Heizanordnungen werden beispielsweise im Sitz oder im Lenkrad verbaut und können insbesondere auch nachgerüstet werden.

Verschiedene Ausführungen derartiger Heizanordnungen oder Heizeinrichtungen sind zum Beispiel aus der WO 2004/105440 A2 zu entnehmen. So sind darin beispielsweise als Flächenheizung ausgebildete Heizeinrichtungen beschrieben, bei denen eine elektrisch leitfähige Heizschicht auf einem Träger aufgebracht ist. Entsprechende Heizeinrichtungen bilden dabei zum Beispiel matratzenartige Elemente aus, die sich als heizbare Sitzauflagen nutzen lassen.

Beheizbare Fußmatten sind beispielsweise aus DE 201 00 146 U, aus der DE 10 2011 101 011 A1 oder auch aus der JP 04050035 zu entnehmen. Weitere Heizeinrichtungen sind darüber hinaus auch aus DE 20 2013 003 491U1, US 2009/0289045 A1 oder US 6 897 417 B1 zu entnehmen

Der Erfindung liegt die Aufgabe zugrunde eine verbesserte Heizanordnung für ein Kraftfahrzeug anzugeben. Desweiteren soll ein Heizelement für eine solche Heizanordnung angegeben werden.

Die Aufgabe wird erfindungsgemäß gelöst durch eine Heizanordnung mit den Merkmalen des Anspruchs 1 und ein Heizelement mit den Merkmalen des Anspruchs 15. Vorteilhafte Ausgestaltungen, Weiterbildungen und Varianten sind Gegenstand der Unteransprüche.

Hierzu ist vorgesehen, dass eine Heizanordnung für ein Kraftfahrzeug ein Heizelement, nämlich eine Fußmatte, aufweist, das wenigstens eine Heizkomponente zur Erzeugung von Wärme umfasst. Desweiteren ist ein an dem Kraftfahrzeug anbringbar erstes Übertragungselement zur kontaktlosen Übertragung von elektrischer Energie zu einem an dem Heizelement angebrachten zweiten Übertragungselement vorgesehen, wobei die beiden Übertragungselemente voneinander galvanisch getrennt sind. Hierdurch entfällt insbesondere die Notwendigkeit eines Kabels beispielsweise mit Steckverbinder zur Versorgung des Heizelementes mit elektrischer Energie, wodurch insbesondere die Handhabung und/oder die Fertigung vereinfacht sind. Desweiteren ist auch die Sicherheit der Heizanordnung verbessert.

Unter Heizelement wird hierbei eine zusätzlich in ein Kraftfahrzeug einbau-, einsetz- oder einlegbare Vorrichtung verstanden, die als sogenannte Fußbodenmatte oder Fußmatte, nachfolgend auch kurz als Matte bezeichnet, ausgebildet ist und dementsprechend für ein Einlegen in einem Fußraum eines Kraftfahrzeuges ausgelegt ist. Die Heizkomponente ist dabei ein Teil des Heizelementes und erzeugt Wärme in geeigneter Weise. Insbesondere kann ein Heizelement mehrere Heizkomponenten aufweisen. Die von der Heizanordnung erzeugte Heizwirkung ist durch eine Heizleistung definiert. Diese liegt beispielsweise im Bereich zwischen 10 W und 200 W. Bei dem Heizelement, also der Fußmatte, handelt es sich vorzugsweise um ein reversibel lösbar mit dem Fahrzeug verbundenes Element, welches beispielsweise lediglich auf eine Fahrzeugkomponente aufgelegt wird. Ein derartiges Heizelement ist dann zu Reinigungszwecken einfach zu entnehmen.

Eine derartige Heizanordnung ist in einem Kraftfahrzeug integriert. Die Erfindung betrifft daher auch ein Kraftfahrzeug mit einer derartigen Heizanordnung.

In einer vorteilhaften Ausgestaltung weisen die beiden Übertragungselemente jeweils wenigstens eine Spule zur Herstellung einer induktiven Kopplung des ersten Übertragungselementes mit dem zweiten Übertragungselement auf. Hierdurch wird dann auch die galvanische Trennung von Heizelement und Kraftfahrzeug realisiert. Alternativ oder ergänzend hierzu weisen die beiden Übertragungselemente jeweils wenigstens eine Elektrode zur Herstellung einer kapazitiven Kopplung des ersten Übertragungselementes mit dem zweiten Übertragungselement auf. Auch hierdurch läßt sich die zuvor beschriebene galvanische Trennung von Heizelement und Kraftfahrzeug realisieren. Auch ist es möglich, dass die Übertragungselemente jeweils eine Kombination von einer Anzahl von Spulen und einer Anzahl von Elektroden aufweisen.

In einer geeigneten Weiterbildung ist das zweite Übertragungselement aus einem ferromagnetischen Werkstoff gefertigt. Hierbei wird unter ferromagnetisch insbesondere verstanden, dass der Werkstoff bei Raumtemperatur ferromagnetisch ist. Hierdurch ist es insbesondere möglich, auf einfache Weise eine Wirbelstromheizung zu realisieren. Allgemein werden daher in einer bevorzugten Variante, insbesondere bei der induktiven Kopplung, Wirbelströme induziert.

Bevorzugterweise ist die Heizkomponente zugleich das zweite Übertragungselement. Insbesondere in Kombination mit einer kapazitiven oder induktiven Kopplung ist die Heizkomponente hierbei eine Elektrode beziehungsweise eine Spule. Dadurch ist es möglich, mittels in dem zweiten Übertragungselement erzeugter Wirbelströme eine Heizwirkung zu erzielen. In anderen Worten: der Heizwirkung der Heizanordnung liegt eine kapazitive beziehungsweise induktive Wirbelstromheizung zugrunde. Vorteilhafterweise ist dazu der ohmsche Wiederstand des zweiten Übertragungselementes geeignet dimensioniert. Hierdurch kann insbesondere die Heizwirkung eingestellt werden. Eine Einstellung erfolgt dabei entweder herstellerseitig oder auch anwenderseitig über einen geeigneten Mechanismus, beispielsweise durch einen zusätzlichen variablen ohmschen Wiederstand in Form eines Potentiometers.

Vorteilhafterweise ist das Heizelement aus einem Werkstoff gefertigt, der unterhalb einer Umschlagstemperatur ferromagnetisch und oberhalb dieser Umschlagstemperatur paramagnetisch ist, wobei die Umschlagstemperatur einstellbar ist. Insbesondere ist hierbei die Umschlagstemperatur die Curie-Temperatur des verwendeten Werkstoffes. Dadurch kann insbesondere in Kombination mit einer Wirbelstromheizung eine automatische Abschaltung des Heizelementes bei einer vorgegebenen Temperatur, die im Wesentlichen der Umschlagstemperatur entspricht, erzielt werden. Weist das Heizelement eine Temperatur auf, die größer ist als die Umschlagstemperatur, verhält sich der Werkstoff im Wesentlichen paramagnetisch, wodurch die Energiezufuhr und damit insbesondere die Erzeugung von Wärme reduziert oder gänzlich unterbunden sind. Der Werkstoff ist beispielsweise eine Legierung aus einer Anzahl von Legierungspartnern und die Umschlagstemperatur ist durch Wahl geeigneter Massenverhältnisse der Legierungspartner einstellbar.

Bevorzugterweise ist die Übertragung von Energie von dem ersten Übertragungselement zu dem zweiten Übertragungselement temperaturabhängig, und zwar insbesondere abhängig von der Temperatur des Heizelements selbst. Dadurch lässt sich insbesondere ein Überhitzungsschutz realisieren. Dabei wird insbesondere bei Erreichen einer vorgegebenen Temperatur die Übertragung von elektrischer Energie reduziert oder unterbunden.

In einer weiteren alternativen Ausgestaltung ist die Heizkomponente ein ohmscher Wiederstand. Hierdurch sind insbesondere bereits für herkömmliche Heizelemente verwendete Heizkomponenten verwendbar oder einsetzbar. Die beiden Übertragungselemente dienen dann der Übertragung von Energie vom Kraftfahrzeug zur Heizkomponente. Dazu ist weiterhin die Heizkomponente mit dem zweiten Übertragungselement elektrisch leitend verbunden. Die Heizkomponente ist beispielsweise ein Heizdraht in Form eines Leiters mit einem vorgegebenen ohmschen Widerstandswert.

Vorzugsweise weist das Heizelement eine Abschirmvorrichtung auf. Dadurch ist es insbesondere möglich, den für Innenräume von Kraftfahrzeugen geltenden EMV-Richtlinien zu genügen. Zusätzlich ist es insbesondere möglich, Insassen und/oder weitere Komponenten des Fahrzeuges, beispielsweise Fahrassistenzsysteme, gegenüber elektromagnetischer Strahlung abzuschirmen. Die Abschirmvorrichtung ist beispielsweise ein das zweite Übertragungselement und/oder das Heizelement wenigstens teilweise umgebendes oder abdeckendes Drahtgitter, -geflecht oder eine Metallfolie. Vorzugsweise ist die Abschirmvorrichtung derart angeordnet, dass diese in eingebautem Zustand des Heizelementes den Innenraum des Kraftfahrzeuges wenigstens teilweise gegen das zweite Übertragungselement abschirmt.

In einer weiteren vorteilhaften Ausgestaltung weist die Heizanordnung einen Temperatursensor zur Messung einer Temperatur auf. Beispielsweise wird eine Innenraumtemperatur des Kraftfahrzeuges gemessen. Insbesondere in Kombination mit einer Steuerungselektronik ist es hierdurch möglich, die Heizleistung in Abhängigkeit der Temperatur, insbesondere der Innentemperatur zu regeln.

Geeigneterweise ist die Heizkomponente selbst der Temperatursensor. Hierdurch ist die Heizanordnung insbesondere im Aufbau vereinfacht. Beispielsweise wird die Temperatur der Heizkomponente über deren ohmschen Wiederstand ermittelt. Die Heizkomponente ist beispielsweise zusätzlich als Kalt- oder Heißleiter ausgebildet. In einer vorteilhaften Ausgestaltung ist die Heizkomponente sowohl der Temperatursensor als auch das zweite Übertragungselement. Hierdurch ergibt sich insbesondere ein besonders kompakter und einfacher Aufbau der Heizanordnung. Beispielsweise ist das Heizelement eine Spule, das zugleich zur Herstellung einer induktiven Kopplung mit dem als Spule ausgebildete erste Übertragungselement dient, und deren ohmscher Wiederstand zur Ermittlung der Temperatur der Heizkomponente dient. Dabei ist die Steuerungselektronik beispielsweise an dem Heizelement angebracht sein.

Vorteilhafterweise ist die Übertragung der elektrischen Energie und insbesondere die Heizwirkung in Abhängigkeit der Temperatur gesteuert oder geregelt. Unter Temperatur wird dabei beispielsweise die Innenraumtemperatur des Kraftfahrzeuges und/oder die Temperatur der Heizkomponente verstanden. Hierdurch ist es insbesondere möglich, einen Bereich des Kraftfahrzeuges auf eine vorgegebene Temperatur zu heizen.

In einer vorteilhaften Ausgestaltung weist die Heizanordnung eine Positionierhilfe zur Herstellung einer lösbaren, insbesondere mechanischen Verbindung des Heizelementes mit dem Kraftfahrzeug auf. Dadurch wird insbesondere eine Effizienz der insbesondere kontaktlosen Übertragung von Energie mittels der galvanisch getrennten Übertragungselemente verbessert. Beispielsweise weisen das Heizelement und das Kraftfahrzeug eine Anzahl von Druckknopfverbindungen auf, mittels welcher das Heizelement lösbar und in definierter, relativer Anordnung zum Kraftfahrzeug anbringbar ist. Weitere Beispiele für Positionierhilfen zur Herstellung einer lösbaren Verbindung sind Klettverschluss, Reißverschluss, geeignete Magneten, Klebestreifen, Steckverbindungen und/oder Rast-/Schnappelemente. In einer alternativen Ausgestaltung weist das Heizelement eine Anzahl von Magneten und das Kraftfahrzeug dazu komplementäre Markierungen auf, wobei die Markierungen eine Anzahl von zur Herstellung einer magnetischen Haftverbindung geeignete Stellen des Kraftfahrzeuges markieren. In einer weiteren alternativen Ausgestaltung weist lediglich das Heizelement wenigstens zwei Arten zueinander komplementärer Positionierhilfen auf. Hierdurch ist es möglich, das Heizelement nach Art einer Heizmanschette um einen Teil des Kraftfahrzeuges, beispielsweise Motor oder Lenkrad, herum anzuordnen.

In einer vorteilhaften Weiterbildung ist das erste Übertragungselement elektrisch leitend mit einer Wechselstromquelle verbunden. Mit anderen Worten: das Kraftfahrzeug weist geeigneterweise eine Wechselstromquelle auf, die zur Versorgung der Heizkomponente mit Energie dient. Hierdurch ist es insbesondere möglich auf einen in dem Heizelement separat eingebauten Wechselrichter zu verzichten, wodurch das Heizelement platzsparend und kostengünstig fertigbar ist. Der Vorteil tritt besonders deutlich beim Einbau mehrerer Heizelemente in das Kraftfahrzeug hervor, da dann lediglich eine Wechselstromquelle zur Versorgung dieser Heizelemente benötigt wird. Eine Wechselstromquelle kann beispielsweise ein in dem Kraftfahrzeug vorhandener Wechselstromgenerator sein oder auch eine Kombination eines Energiespeichers, beispielsweise einer Batterie, und eines Wechselrichters. Dabei generiert die Wechselstromquelle eine Wechselspannung mit einer Frequenz, wobei der zeitliche Mittelwert der Wechselspannung beispielsweise im Bereich von 100 V bis 300 V liegt und die Frequenz beispielsweise im Bereich von 100 kHz bis 200 kHz.

In einer vorteilhaften Ausgestaltung ist die Heizkomponente als Mehrschichtstruktur ausgebildet. Hierdurch ist insbesondere die Verarbeitungsfähigkeit der Heizkomponente verbessert. Insbesondere ist die Wärmeleitung in diesem Fall deutlich verbessert. Beispielsweise umfasst die Mehrschichtstruktur eine ferromagnetische Schicht, die zwischen zwei Kupferschichten angeordnet ist. Alternativ wird Aluminium anstelle von Kupfer verwendet. Diese Anordnung stellt dann insbesondere einen guten Kompromiss zwischen hoher Wärmeleitfähigkeit und niedrigen Fertigungskosten und/oder Gewicht dar.

Zur Herstellung der Mehrschichtstruktur sind verschiedene Verfahren geeignet: Walzplattieren zum Verbinden zweier Metallfolien, Schweißen zweier Folien, Kleben mittels eines wärmeleitfähigen Metallklebers, thermisches Aufspritzen, insbesondere der wärmeleitfähigen Schicht. Ebenso geeignet ist ein Vernieten, Clinchen oder Toxen der mehreren Schichten. Alternativ eignet sich auch ein galvanisches Verfahren, bei dem mehrere Schichten nacheinander galvanisch aufgetragen werden.

Die Heizkomponente weist geeigneterweise ein flächiges, metallisches Element auf. Dieses umfasst hierzu vorzugsweise eine flächige Metallfolie, ein flächiges Metallblech, ein Metallgestrick, ein Metallgitter oder eine Anzahl von Metallstreifen, wodurch eine besonders kostengünstige und einfach zu fertigende Heizkomponente realisiert ist. In einer zweckmäßigen Ausgestaltung ist die Heizkomponente lediglich eine flächige Metallfolie. In einer geeigneten Variante ist die Heizkomponente aus einer metallisierten oder mit Metall kaschierten Kunststofffolie oder einem metallisierten Kunststoffgitter gefertigt. In einer bevorzugten Ausgestaltung umfasst die Heizkomponente eine flächige Metallfolie mit einer Stärke von wenigstens 1 µm und höchstens 100 µm, wodurch der von der Heizkomponente benötigte Bauraum besonders reduziert ist.

In einer geeigneten Variante umfasst die Heizkomponente eine Anzahl von Heizfäden. Beispielsweise weist die Heizkomponente einen Metallfaden oder eine Mehrzahl von Metallfäden auf. Alternativ ist der Heizfaden ein metallisierter Kunststoff- oder Textilfaden, beispielsweise ein Tinsel. Eine solche Ausgestaltung eignet sich besonders zur Einarbeitung der Heizkomponente in ein Textil, beispielsweise eine Fußmatte oder einen Sitzbezug oder dergleichen in einem Kraftfahrzeug. Zur Verarbeitung wird bevorzugt auf textile Verarbeitungstechniken, wie beispielsweise Nähen, Stricken, Weben etc. zurückgegriffen.

In einer weiteren geeigneten Variante umfasst die Heizkomponente eine Mehrzahl von Heizpartikeln, insbesondere Metallflakes oder Metallpulverpartikel. Diese Partikel sind insbesondere in einem Träger gehalten oder in eine Trägermatrix eingebettet, beispielsweise in einen Kunststoff oder ein Gummi eingemischt. Dadurch ist die Heizkomponente bezüglich deren Form besonders frei gestaltbar und sich an eine jeweilige Anwendung anpassen lässt. Zudem ist hierdurch auch ein in mechanischer Hinsicht im Gebrauch besonders flexibles Heizelement realisierbar.

Vorzugsweise ist die Heizkomponente hierbei als thermisch gespritzte Lage zwischen einer Grund- und einer Decklage einer mehrlagig aufgebauten Fußmatte ausgebildet. Insbesondere wird bei der Herstellung einer solchen Fußmatte vorzugsweise die Heizkomponente als separate Lage in einem thermischen Spritzverfahren ausgebildet.

Alternativ werden in einem geeigneten Herstellungsverfahren ein oder mehrere Heizfäden, beispielsweise Metallfäden oder metallisierte Fäden mit Hilfe eines textilen Verarbeitungsverfahrens in ein Trägerelement, insbesondere ein Textil eingebracht, beispielsweise eingestickt, eingenäht, eingewirkt oder eingewebt. Dabei eignet sich ein solches Verfahren nicht lediglich zur Herstellung von Fußmatten sondern zur Herstellung eines jeglichen auf einem Textil basierenden Heizelements.

Vorteilhafterweise weist die Heizanordnung eine Steuerungseinrichtung mit einer Steuerungselektronik einer Steuerungseinheit auf. Dadurch ist insbesondere eine Steuerung der Heizanordnung möglich. Beispielsweise wird die Heizanordnung mittels der Steuerungselektronik ein- oder ausgeschaltet. Geeigneterweise wird die Heizanordnung in Abhängigkeit eines Betriebszustandes des Kraftfahrzeuges gesteuert. Dadurch ist es insbesondere möglich, die Heizanordnung automatisch den Anforderungen des Betriebszustandes anzupassen. Dabei ist ein Betriebszustand beispielsweise eine geöffnete Fahrzeugtür oder eine aktivierte Verriegelung des Kraftfahrzeuges. In diesem Fall kann das Heizelement mittels der Steuerungselektronik beispielsweise abgeschaltet werden.

In einer vorteilhaften Weiterbildung steuert oder regelt die Steuerungselektronik die Übertragung der elektrischen Energie. Hierdurch ist es insbesondere möglich die Heizleistung der Heizanordnung einzustellen. Dies geschieht beispielsweise automatisch und/oder anwenderseitig insbesondere mittels geeigneter Bedienelemente.

Bevorzugt umfasst die Steuerungseinrichtung eine zentrale Steuereinheit zur Abgabe eines Steuersignals an das Heizelement, wobei diesem eine Sensoreinheit mit einem Sensor zur Erfassung des Werts einer den Zustand des Verbrauchers charakterisierenden Messgröße zugeordnet ist und die Sensoreinheit ein Kommunikationsmodul für eine drahtlose Kommunikationsverbindung mit der zentralen Steuereinheit aufweist. Weiterhin wird die Energie zum Betrieb der Sensoreinheit aus der Kommunikationsverbindung gewonnen.

Durch die drahtlose Kommunikation der Sensoreinheit und der Steuereinheit ist zum einen keine drahtgebundene Kommunikationsleitung erforderlich. Weiterhin ist aufgrund der Energieversorgung mit aus der Kommunikationsverbindung gewonnener Energie auch keine drahtgebundene Integration in das Bordnetz des Kraftfahrzeugs erforderlich. Die Sensoreinheit kann daher vollständig kontaktlos, also ohne Drahtverbindung betrieben werden.

In bevorzugter Ausgestaltung umfasst dabei das Kommunikationsmodul ein RFID-Element, über welches die Kommunikation mit der zentralen Steuereinheit erfolgt. Komplementär weist auch die zentrale Steuereinheit ein entsprechendes RFID-Element auf. Insbesondere sind die RFID-Elemente der Sensoreinheit sowie der zentralen Steuereinheit für eine bidirektionale Kommunikation ausgebildet. Über die Steuereinheit wird hierbei eine Abfrage des Wertes der Messgröße initiiert, welcher dann von der Sensoreinheit an die Steuereinheit übertragen wird.

In bevorzugter Ausgestaltung umfasst dabei die Sensoreinheit einen Energiespeicher zur Zwischenspeicherung der aus der Kommunikationsverbindung gewonnenen Energie. Bei dem Energiespeicher handelt es sich beispielsweise um einen geeignet dimensionierten Kondensator. Der Energiespeicher dient dabei zur Energieversorgung der Sensoreinheit sowie insbesondere auch des Sensors. Über den Energiespeicher wird quasi ein Puffer bereitgestellt, so dass die über die Kommunikationsverbindung enthaltene Energie auch zu einem Zeitpunkt zur Verfügung steht, wenn die Kommunikationsverbindung nicht mehr besteht.

In zweckdienlicher Ausgestaltung ist die Sensoreinheit zur zeitdiskreten Abfrage der Messgröße ausgebildet und die Kommunikationsverbindung ist nur während der zeitdiskreten Abfrage ausgebildet. Es handelt sich also nicht um eine permanente Kommunikationsverbindung. Vielmehr wird von der zentralen Steuereinheit in wiederkehrenden Zeitabständen beispielsweise im Bereich von Sekunden der aktuelle Wert der Messgröße abgefragt. Aufgrund dieser nur zeitdiskreten Kommunikationsverbindung ist der Energiespeicher von besonderer Bedeutung, um den ordnungsgemäßen Betrieb der Sensoreinheit auch außerhalb der Zeiten der Kommunikationsverbindung zu gewährleisten.

Vorzugsweise ist die zentrale Steuereinheit weiterhin zur Regelung des Heizelements in Abhängigkeit des vom Sensor ermittelten Werts der Messgröße ausgebildet. Die Messgröße bildet daher einen Regelparameter, mit dessen Hilfe der Betrieb des Heizelements geregelt wird.

Weiterhin ist der Sensor zweckdienlicherweise als Temperatursensor zur Erfassung der Temperatur des Verbrauchers selbst ausgebildet.

Die Sensoreinheit ist bevorzugt integraler Bestandteil des Heizelements und beispielsweise zwischen zwei Lagen eingebettet.

Durch die Ausgestaltung des Heizelements, welches kontaktlos mit Leistung versorgt wird und durch die drahtlose Kommunikationsverbindung mit der Energieversorgung der Sensoreinheit ausschließlich über die Kommunikationsverbindung ist daher insgesamt eine elektrische Funktionseinheit, vorzugsweise eine beheizbare Fußbodenmatte, geschaffen, welche vollständig ohne elektrische Anschlussleitungen auskommt. Hierdurch wird die die Fehleranfälligkeit gering gehalten und insbesondere auch eine leichte Auswechselbarkeit beispielsweise zu Reinigungszwecken etc. gewährleistet.

In einer bevorzugten Ausgestaltung ist das Heizelement als eine Heizmatte, insbesondere als Fußmatte ausgebildet, die, bis auf Fixierelemente, lose auf eine Komponente des Fahrzeugs gelegt ist. Hierdurch ist insbesondere eine beheizte Fußmatte für ein Kraftfahrzeug auf einfache Weise realisiert.

Bei dem Verfahren zur Herstellung eines Heizelementes für eine Heizanordnung wird die Heizkomponente bevorzugt als Heizlage zwischen einer Grundlage und einer Decklage des Heizelementes eingearbeitet und befestigt. Auf diese Weise ist das Heizelement und entsprechend die Heizanordnung besonders kostengünstig und flexibel herstellbar. Die Heizkomponente ist dabei insbesondere entweder eine einzelne Schicht oder eine Mehrschichtstruktur. In einer bevorzugten Ausgestaltung wird die als metallische Einlage ausgebildete Heizkomponente zwischen die Grund- und die Decklage eingeklebt. Dabei wird zum Einkleben zweckmäßigerweise ein wärmestabiler sowie wärmeleitfähiger Klebstoff verwendet.

Alternativ wird die Heizkomponente auf die Grund- oder Decklage auflaminiert. Dieses Verfahren eignet sich besonders bei Verwendung einer metallkaschierten Kunststofffolie als Heizkomponente. In einer Variante wird die Heizkomponente mit der Grund- und der Decklage vernäht oder auf eine dieser Lagen aufgenäht, wobei sich insbesondere letzteres Verfahren bei einer Ausgestaltung der Heizkomponente als auf einem Trägermaterial verstickte Metallfäden eignet. In einer weiteren Variante wird ein ferromagnetischer Werkstoff auf die Grund- oder Decklage aufgespritzt und anschließend mit der jeweils verbleibenden Lage verbunden, beispielsweise verklebt. In einer weiteren, bevorzugten Variante wird die Heizkomponente formschlüssig mit der Grund- oder Decklage verstickt, vernäht oder verkettelt, wodurch sich eine besonders geeignete Fixierung ergibt. Dazu weist die Heizkomponente geeigneterweise in einem Randbereich einen bestimmten Überstand auf, in dem die Verbindung erfolgt.

In einer weiteren, geeigneten Variante wird die Heizkomponente eingeschäumt oder umspritzt, beispielsweise mit Gummi. In einer weiteren Variante wird die Heizkomponente in ein beispielsweise als Tasche vorkonfektioniertes Textil oder Gummimaterial eingelegt. In einer geeigneten Ausgestaltung erfolgt eine Befestigung mittels Klammern.

Nachfolgend werden Ausführungsbeispiele der Erfindung anhand einer Zeichnung näher erläutert. Darin zeigen jeweils in schematischen Darstellungen:
- Fig. 1: ein Kraftfahrzeug mit einer Heizanordnung, umfassend ein als Fußmatte ausgebildetes Heizelement,
- Fig. 2: eine Aufsicht auf das Heizelement gemäß Fig. 1,
- Fig. 3: eine Aufsicht auf eine alternative Ausgestaltung des Heizelementes gemäß Fig. 1, mit einer Heizkomponente, die zugleich ein zweites Übertragungselement ist,
- Fig. 4: eine Aufsicht auf eine weitere Ausgestaltung des Heizelementes gemäß Fig. 1,
- Fig. 5: nach Art einer Schnittdarstellung eine Heizanordnung mit einem ersten und einem zweiten Übertragungselement, die jeweils eine Mehrzahl von Spulen umfassen,
- Fig. 6: nach Art einer Schnittdarstellung ein Heizelement, sowie
- Fig. 7: eine Steuerungseinrichtung für ein Kraftfahrzeug umfassend eine zentrale Steuereinheit und eine beheizbare Fußbodenmatte, welche über die zentrale Steuereinheit angesteuert wird.

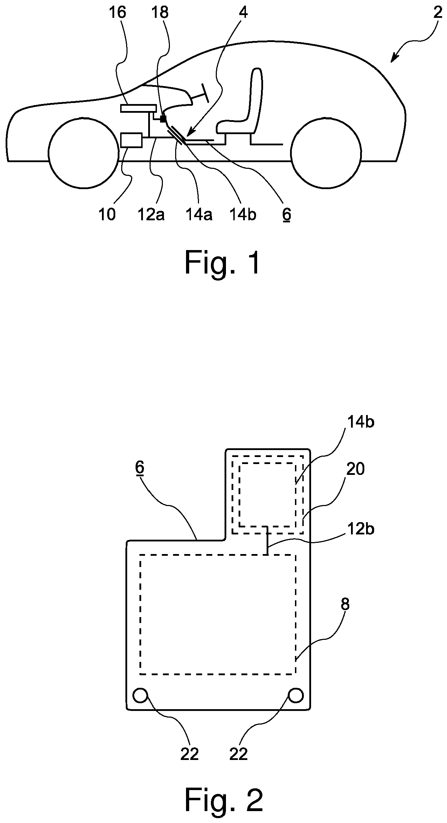

Fig. 1 zeigt schematisch ein Kraftfahrzeug 2 mit einer Heizanordnung 4, umfassend ein als Fußmatte ausgebildetes Heizelement 6, welches eine Heizkomponente 8 (vgl. Fig. 2) aufweist. Eine Wechselstromquelle 10 ist über eine elektrische Verbindung 12a mit einem ersten Übertragungselement 14a verbunden. Das Heizelement 6 umfasst weiterhin ein zweites Übertragungselement 14b und die beiden Übertragungselemente 14a, 14b sind derart ausgestaltet, dass eine kontaktlose Energieübertragung ermöglicht ist. Die beiden Übertragungselemente 14a, 14b sind galvanisch voneinander getrennt, ebenso die Heizkomponente 8 und die Wechselstromquelle 10.

Desweiteren zeigt Fig. 1 eine zentrale Steuerungseinheit 16 mit integrierter Steuerungselektronik welche in dem hier gezeigten Ausführungsbeispiel mit einem Temperatursensor 18 verbunden ist. Die Steuerungselektronik ermittelt hier eine Temperatur mittels des Temperatursensors 18 und steuert die Übertragung elektrischer Energie über die Verbindung 12a in Abhängigkeit der ermittelten Temperatur und / oder in Abhängigkeit einer manuellen Vorgabe durch den Benutzer. In einer alternativen, hier nicht gezeigten Ausführungsform sind die Steuerungselektronik 16 und/oder der Temperatursensor 18 ein Teil des Heizelements 6.

Fig. 2 zeigt das Heizelement 6 gemäß Fig. 1, umfassend das zweite Übertragungselement 14b, welches über eine geeignet ausgestaltete elektrisch leitende Verbindung 12b mit der Heizkomponente 8 verbunden ist. Desweiteren weist das Heizelement 6 eine Abschirmvorrichtung 20 auf, die hier derart angeordnet ist, dass diese das zweite Übertragungselement 14b vollständig überdeckt. Zusätzlich umfasst das Heizelement 6 eine Positionierhilfe 22, die in dem hier gezeigten Ausführungsbeispiel als eine Anzahl von Druckknöpfen ausgestaltet ist. Diese dienen zur Herstellung einer lösbaren, mechanischen Verbindung mit dem Kraftfahrzeug.

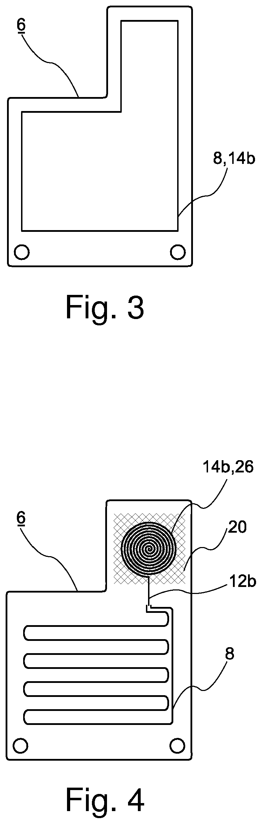

Fig. 3 zeigt eine Ausgestaltung des Heizelementes 6 gemäß Fig. 1, wobei die Heizkomponente 8 zugleich das zweite Übertragungselement 14b ist. Dieses ist hier als Elektrode 24 ausgebildet. Ebenso ist das hier nicht dargestellte erste Übertragungselement 14a als Elektrode ausgebildet. Dadurch wird eine kapazitive Kopplung zur kontaktlosen Übertragung elektrischer Energie realisiert. Eine Heizwirkung wird hier insbesondere durch in der Heizkomponente 8 generierte Wirbelströme erzielt.

Fig. 4 zeigt eine weitere Ausgestaltung des Heizelementes 6 gemäß Fig. 1, wobei das hier nicht gezeigte erste Übertragungselement 14a sowie das zweite Übertragungselement 14b jeweils eine Spule 26 umfassen. Das zweite Übertragungselement 14b ist in dem hier gezeigten Ausführungsbeispiel mittels einer hier als Drahtgeflecht ausgebildeten Abschirmvorrichtung 20 abgedeckt. Auf diese Weise wird eine Abstrahlung von elektromagnetischer Strahlung verringert. Die Heizkomponente 8 ist hier nach Art eines Heizdrahtes zur Realisierung einer Widerstandsheizung ausgebildet und mit dem zweiten Übertragungselement 14b über die elektrische Verbindung 12b verbunden.
Die in den Figuren dargestellten elektrischen Komponenten des Heizelements 6 sind vorzugsweise innerhalb eines Trägermaterials, auch ein mehrschichtiger Trägeraufbau, eingebettet. Insbesondere sind sie zwischen einer bodenseitigen und einer innenraumseitigen (Textil-) Lage der (Fuß-) Matte nach Art eines Sandwich-Aufbaus eingebettet.

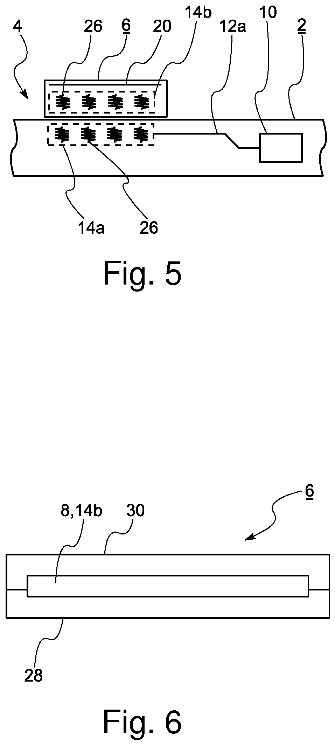

Fig. 5 zeigt einen Ausschnitt des Kraftfahrzeuges 2 gemäß Fig. 1 und die Heizanordnung 4. Deutlich erkennbar ist, dass das erste Übertragungselement 14a über die Verbindung 12a von der Wechselstromquelle 10 mit Energie versorgt wird. Die Energie wird kontaktlos zum zweiten Übertragungselement 14b übertragen, welches hier gleichzeitig die Heizkomponente 8 ist und von einer Abschirmvorrichtung 20 überdeckt ist. Diese ist hier als Folie ausgebildet. In dem hier gezeigten Ausführungsbeispiel umfasst jedes der Übertragungselemente 14a, 14b eine Anzahl von Spulen 26 zur induktiven, kontaktlosen Übertragung elektrischer Energie. Die Heizwirkung wird hierdurch nach Art einer Induktionsheizung erzielt.

In Fig. 6 ist nach Art einer Schnittansicht und schematisch ein Heizelement 6 dargestellt. Das Heizelement 6 ist hier als Mehrlagenstapel ausgeführt und umfasst eine Grundlage 28 und eine Decklage 30, zwischen denen die Heizkomponente 8 als Heizlage angeordnet ist. Diese stellt hier zugleich ein zweites Übertragungselement 14b dar. In dem hier gezeigten Ausführungsbeispiel ist die Heizkomponente 8 als Metallfolie ausgebildet und mit der Grundlage 28 und der Decklage 30 verklebt. In einer alternativen, hier nicht gezeigten Ausführungsform ist die Heizkomponente 8 mit der Grund- und der Decklage 28, 30 vernäht, insbesondere in einem Randbereich.

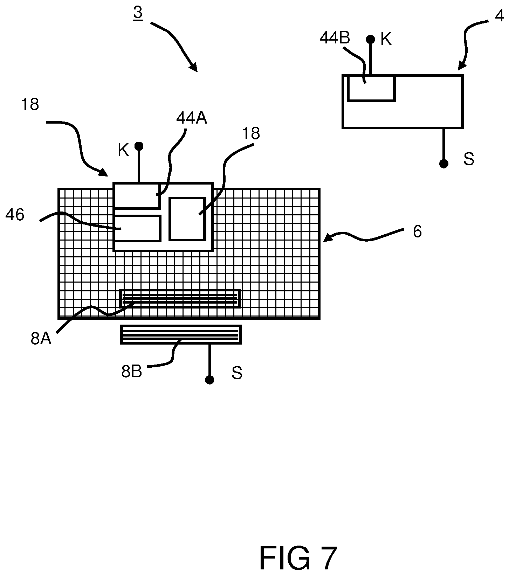

Eine in der Fig. 7 dargestellte Steuerungseinrichtung 32 umfasst die zentrale Steuerungseinheit 16 sowie das Heizelement 6, welches von der zentralen Steuerungseinheit 16 angesteuert wird. Hierzu wird von der zentralen Steuerungseinheit 16 ein Steuersignal S abgegeben.

Bei dem Heizelement 6 handelt es sich insbesondere um ein Heizelement, vorzugsweise eine beheizbare Fußmatte, welche innerhalb des Kraftfahrzeugs angeordnet ist.

Das Heizelement 6 ist zur drahtlosen Energieversorgung ausgebildet und umfasst hierzu ein erstes Energieübertragungsmodul 38A, welches im montierten Zustand mit einem zweiten Energieübertragungsmodul 38B für eine drahtlose Leistungsübertragung zusammenwirkt. Das zweite Energieübertragungsmodul 8B ist dabei kraftfahrzeugseitig fest angeordnet. Die beiden Energieübertragungsmodule 38A, 38B weisen als zentrale Energieübertragungselemente im Falle einer induktiven Leistungsübertragung eine Sende- und Empfängerspule und im Falle einer kapazitiven Energieübertragung Kondensatorelemente auf. Ergänzend weisen diese Energieübertragungsmodule 38A, 38B weitere Steuereinheiten auf, über die gegebenenfalls die Energieübertragung gesteuert und aufbereitet wird. Das kraftfahrzeugseitige zweite Energieübertragungsmodul 38B empfängt von der zentralen Steuerungseinheit 16 das Steuersignal S. In Abhängigkeit des Steuersignals S wird die übertragene Leistung und damit die Heizleistung gesteuert.

Die Steuerung erfolgt dabei anhand einer Regelstrecke, wobei hierzu die Temperatur des Heizelements 6 erfasst wird. Hierzu ist dem Heizelement 6 eine Sensoreinheit 40 zugeordnet und insbesondere in dem Heizelement 6 direkt integriert. Die Sensoreinheit 40 weist hierbei einen Sensor, insbesondere den Temperatursensor 18 auf. Über diesen wird die aktuelle Temperatur des Verbrauchers und / oder der Umgebung erfasst.

Die Sensoreinheit 40 ist insgesamt zur drahtlosen Signalübermittlung ausgebildet, übermittelt daher die gemessenen Werte der Temperatur über eine drahtlose, bidirektionale Kommunikationsverbindung mittels Kommunikationssignalen K an die zentrale Steuereinheit 16.

Die Sensoreinheit 40 ist weiterhin als eine energieautarke Einheit ausgebildet. Hierunter wird vorliegend verstanden, dass keine drahtgebundene oder batteriebetriebene Stromversorgung für den Betrieb der Sensoreinheit erforderlich ist. Vielmehr wird die für den Betrieb der Sensoreinheit erforderliche Energie ausschließlich aus der drahtlosen Kommunikationsverbindung zwischen Sensoreinheit 40 und der zentralen Steuereinheit 4 erhalten. Hierzu umfasst die Sensoreinheit 40 ein erstes Kommunikationsmodul, welches als RFID-Element 44A ausgebildet ist oder ein solches zumindest umfasst. Diesem ist auf Seiten der zentralen Steuerungseinheit ein zweites als RFID-Element 44B ausgebildetes Kommunikationsmodul zugeordnet. Bei der RFID-Technologie (Radio Frequency Identification) handelt es sich um ein bekanntes und etabliertes Sende-Empfängersystem, welches generell einen Transponder und ein Lesegerät umfasst. Im vorliegenden Fall wird jeweils eine bidirektionale Kommunikation ausgebildet, so dass beide RFID-Elemente 44A, 44B sowohl einen Transponder als auch ein Lesegerät aufweisen. Der Transponder wiederum besteht typischerweise aus einem Mikrochip, sowie einer Antenne, welche auf einem Träger aufgebracht sind. Im vorliegenden Fall ist in dem verbraucherseitigen RFID-Element 44A ein passiver RFID-Transponder integriert, welcher also aus den Funksignalen, die es vom zweiten RFID-Element 44B der zentralen Steuereinheit 16 erhält, mit Energie versorgt wird. Hierzu ist beispielsweise eine Empfangsantenne nach Art einer Spule ausgebildet.

Weiterhin ist in der Sensoreinheit 40 ein Energiespeicher 46 nach Art eines Pufferspeichers integriert, welcher beispielweise als Kondensator ausgebildet ist.

Während des Betriebs wird von der zentralen Steuereinheit 16 regelmäßig zu diskreten Zeitpunkten der jeweils aktuelle Temperaturwert von der Sensoreinheit 40 abgefragt. Hierzu wird also eine Kommunikationsverbindung zeitdiskret zu der Sensoreinheit 40 aufgebaut. Während der Dauer dieser Kommunikationsverbindung wird die Energie aus dem übertragenen Funksignal erhalten und in dem Energiespeicher 46 zwischengespeichert. Die gespeicherte Energiemenge ist dabei vorzugsweise derart bemessen, dass sie (maximal) für einen (einzigen) derartigen Abfragezyklus ausreicht. Unter Abfragezyklus wird hierbei das einmalige Messen des Temperaturwerts sowie die Übermittlung des gemessenen Temperaturwerts an die zentrale Steuerungseinheit 16 verstanden.

Nach Erhalt des Abfragesignals wird also von der Sensoreinheit 40 über den Temperatursensor 18 die Messung des aktuellen Temperaturwerts veranlasst und an die zentrale Steuerungseinheit 16 übermittelt.

Mit der hier beschriebenen Steuerungsvorrichtung 32, die innerhalb eines Kraftfahrzeugs angeordnet ist, wird der besondere Vorteil erreicht, dass für den gesamten Betrieb des elektrischen Heizelements 6, also insbesondere der Heizmatte keine elektrischen drahtgebundenen Kontaktverbindungen zum Heizelement 6 erforderlich sind. Das Heizelement 6 selber kann daher einfach entfernt und ausgetauscht werden. Auch besteht hierdurch die Möglichkeit, schwierig gelegene Heizelement, die beispielsweise hinter Kunststoffblenden etc. angeordnet sind, ohne Durchführungen und damit auch ohne zugehörige Abdichtprobleme sensorisch zu erfassen. Insgesamt arbeitet daher die Steuerungseinrichtung 2 insofern rein passiv und ist damit wartungsfrei.

### Bezugszeichenliste

- 2: Kraftfahrzeug
- 4: Heizanordnung
- 6: Heizelement
- 8: Heizkomponente
- 10: Wechselstromquelle
- 12a: elektrische Verbindung
- 12b: elektrische Verbindung
- 14a: erstes Übertragungselement
- 14b: zweites Übertragungselement
- 16: Steuerungseinheit
- 18: Temperatursensor
- 20: Abschirmvorrichtung
- 22: Positionierhilfe
- 24: Elektrode
- 26: Spule
- 28: Grundlage
- 30: Decklage

- 3: Steuerungseinrichtung
- 38A: erstes Energieübertragungsmodul
- 38B: zweites Energieübertragungsmodul
- 40: Sensoreinheit
- 44A: erstes RFID-Element (Kommunikationsmodul)
- 44B: zweites RFID-Element (Kommunikationsmodul)
- 46: Energiespeicher

- S: Steuersignal
- K: Kommunikationssignal

## Patentansprüche

1. Heizanordnung (4) für ein Kraftfahrzeug (2) mit einem Heizelement (6), nämlich einer Fußmatte, das wenigstens eine Heizkomponente (8) zur Erzeugung von Wärme aufweist, und mit einem an dem Kraftfahrzeug (2) anbringbar ersten Übertragungselement (14a) zur Übertragung von elektrischer Energie zu einem an dem Heizelement (6) anbringbar zweiten Übertragungselement (14b), wobei die beiden Übertragungselemente (14a, 14b) voneinander galvanisch getrennt sind und wobei zur Energieübertragung eine induktive und/oder kapazitive Kopplung vorgesehen ist.

2. Heizanordnung (4) nach dem vorhergehenden Anspruch, **dadurch gekennzeichnet, dass** das zweite Übertragungselement (14b) aus einem ferromagnetischen Werkstoff gefertigt ist.

3. Heizanordnung (4) nach einem der vorhergehenden Ansprüche, **dadurch gekennzeichnet, dass** die Heizkomponente (8) das zweite Übertragungselement ist (14b) und insbesondere eine Wirbelstromheizung ausgebildet ist.

4. Heizanordnung (4) nach einem der vorhergehenden Ansprüche, **dadurch gekennzeichnet, dass** das zweite Übertragungselement (14b) aus einem Werkstoff gefertigt ist, der unterhalb einer Umschlagstemperatur ferromagnetisch und oberhalb dieser Umschlagstemperatur paramagnetisch ist, wobei die Umschlagstemperatur einstellbar ist.

5. Heizanordnung (4) nach einem der vorhergehenden Ansprüche,
**dadurch gekennzeichnet,**
**dass** die Übertragung von Energie von dem ersten Übertragungselement (14a) zu dem zweiten Übertragungselement (14b) abhängig von der Temperatur des Heizelements (6) ist.

6. Heizanordnung (4) nach einem der vorhergehenden Ansprüche,
**dadurch gekennzeichnet,**
**dass** diese einen Temperatursensor (18) zur Ermittlung einer Temperatur aufweist, wobei die Heizkomponente (8) der Temperatursensor (18) ist.

7. Heizanordnung (4) nach einem der vorhergehenden Ansprüche,
**dadurch gekennzeichnet,**
**dass** das erste Übertragungselement (14a) elektrisch leitend mit einer Wechselstromquelle (10) verbunden ist.

8. Heizanordnung (4) nach einem der vorhergehenden Ansprüche,
**dadurch gekennzeichnet,**
**dass** die Heizkomponente (8) eine Mehrschichtstruktur aufweist mit einer ferromagnetischen Schicht, an die zumindest eine weitere metallische Schicht angrenzt.

9. Heizanordnung (4) nach einem der vorhergehenden Ansprüche,
**dadurch gekennzeichnet,**
**dass** die Heizkomponente (8) ein flächiges, metallisches Element, eine Anzahl von Heizfäden, eine Mehrzahl von in einer Trägermatrix eingebetteten Heizpartikeln oder eine flächige Metallfolie mit einer Stärke von wenigstens 1 µm und höchstens 100 µm aufweist.

10. Heizanordnung (4) nach dem vorhergehenden Anspruch,
**dadurch gekennzeichnet,**
**dass** das Heizelement (6) mehrlagig aufgebaut ist und die Heizkomponente (8) als thermisch gespritzte Lage zwischen einer Grund- und einer Decklage (28, 30) des Heizelements (6) ausgebildet ist.

11. Heizanordnung (4) nach einem der vorhergehenden Ansprüche,
**dadurch gekennzeichnet,**
**dass** diese eine Steuerungseinrichtung (2) aufweist mit einer zentralen Steuereinheit (4) zur Abgabe eines Steuersignals (S) an das Heizelement (6), wobei dem Heizelement (6) eine Sensoreinheit (10) mit einem Sensor (12) zur Erfassung des Werts einer den Zustand des Heizelements (6) charakterisierenden Messgröße zugeordnet ist und die Sensoreinheit (10) ein Kommunikationsmodul (14A) für eine drahtlosen Kommunikationsverbindung mit der zentralen Steuereinheit (4) aufweist und die Energie zum Betrieb der Sensoreinheit (10) aus der Kommunikationsverbindung gewonnen wird.

12. Heizanordnung (4) nach Anspruch 11,
**dadurch gekennzeichnet,**
**dass** das Kommunikationsmodul (14A) ein RFID-Element aufweist.

13. Heizanordnung (4) nach Anspruch 11 oder 12,
**dadurch gekennzeichnet,**
**dass** die Sensoreinheit (10) einen Energiespeicher (16) zur Zwischenspeicherung der aus der Kommunikationsverbindung gewonnenen Energie aufweist.

14. Heizanordnung (4) nach einem der Ansprüche 11 bis 13,
**dadurch gekennzeichnet,**
**dass** die Sensoreinheit (10) zur zeitdiskreten Abfrage der Messgröße ausgebildet ist und die Kommunikationsverbindung nur während der zeitdiskreten Abfrage ausgebildet ist.

15. Heizelement (6), nämlich eine Fußmatte, für eine Heizanordnung (4) nach einem der vorhergehenden Ansprüche, das wenigstens eine Heizkomponente (8) zur Erzeugung von Wärme aufweist sowie ein zweites Übertragungselement (14b), welches mit einem an einem Kraftfahrzeug (2) anbringbar ersten Übertragungselement (14a) zur Übertragung von elektrischer Energie vom ersten Übertragungselement (14a) zum zweiten Übertragungselement (14b) koppelbar ist, wobei die beiden Übertragungselemente (14a, 14b) im eingebauten Zustand der Fußmatte voneinander galvanisch getrennt sind und wobei zur Energieübertragung eine induktive und/oder kapazitive Kopplung vorgesehen ist.

## Claims

1. Heating system (4) for a motor vehicle (2), comprising a heating element (6), namely a foot mat, which has at least one heating component (8) for generating heat, and having a first transmission element (14a) that can be fitted to the motor vehicle (2) for transmitting electrical energy to a second transmission element (14b) that can be fitted to the heating element (6), wherein the two transmission elements (14a, 14b) are isolated electrically from each other and wherein an inductive and/or capacitive coupling is provided for the transmission of energy.

2. Heating system (4) according to the preceding claim,
**characterized in that**
the second transmission element (14b) is made of a ferromagnetic material.

3. Heating system (4) according to one of the preceding claims,
**characterized in that**
the heating component (8) is the second transmission element (14b) and in particular is formed as an eddy-current heater.

4. Heating system (4) according to one of the preceding claims,
**characterized in that**
the second transmission element (14b) is made of a material which is ferromagnetic below a changeover temperature and is paramagnetic above this changeover temperature, wherein the changeover temperature is adjustable.

5. Heating system (4) according to one of the preceding claims,
**characterized in that**
the transmission of energy from the first transmission element (14a) to the second transmission element (14b) is dependent on the temperature of the heating element (6).

6. Heating system (4) according to one of the preceding claims,
**characterized in that**
this has a temperature sensor (18) for determining a temperature, wherein the heating component (8) is the temperature sensor (18).

7. Heating system (4) according to one of the preceding claims,
**characterized in that**
the first transmission element (14a) is electrically conductively connected to an AC source (10).

8. Heating system (4) according to one of the preceding claims,
**characterized in that**
the heating component (8) has a multilayer structure with a ferromagnetic layer which is adjoined by at least one further metallic layer.

9. Heating system (4) according to one of the preceding claims,
**characterized in that**
the heating component (8) has a flat metallic element, a number of heating filaments, a plurality of heating particles embedded in a carrier matrix or a flat metal foil with a thickness of at least 1 µm and at most 100 µm.

10. Heating system (4) according to the preceding claim,
**characterized in that**
the heating element (6) is built up in multiple layers and the heating component (8) is formed as a thermally sprayed layer between a base layer and a top layer (28, 30) of the heating element (6).

11. Heating system (4) according to one of the preceding claims,
**characterized in that**
this has a control device (2) with a central control unit (4) for outputting a control signal (S) to the heating element (6), wherein the heating element (6) is assigned a sensor unit (10) having a sensor (12) for measuring the value of a measured variable characterizing the state of the heating element (6), and the sensor unit (10) has a communications module (14A) for a wire-free communications link to the central control unit (4), and the energy for operating the sensor unit (10) is obtained from the communications link.

12. Heating system (4) according to Claim 11, **characterized in that**
the communications module (14A) has an RFID element.

13. Heating system (4) according to Claim 11 or 12, **characterized in that**
the sensor unit (10) has an energy store (16) for the intermediate storage of the energy obtained from the communications link.

14. Heating system (4) according to one of Claims 11 to 13,
**characterized in that**
the sensor unit (10) is designed for the time-discrete polling of the measured variable, and the communications link is formed only during the time-discrete polling.

15. Heating element (6), namely a foot mat, for a heating system (4) according to one of the preceding claims, which has at least one heating component (8) for generating heat and also a second transmission element (14b) which can be coupled to a first transmission element (14a) that can be fitted to a motor vehicle (2) for the transmission of electrical energy from the first transmission element (14a) to the second transmission element (14b), wherein, when the foot mat is in the installed state, the two transmission elements (14a, 14b) are isolated electrically from each other, and wherein an inductive and/or capacitive coupling is provided for the transmission of energy.

## Revendications

1. Arrangement chauffant (4) pour un véhicule automobile (2), comprenant un élément chauffant (6), à savoir un tapis de sol, lequel possède au moins un composant chauffant (8) destiné à produire de la chaleur, et comprenant un premier élément de transmission (14a) qui peut être monté sur le véhicule automobile (2), servant à transmettre de l'énergie électrique à un deuxième élément de transmission (14b) qui peut être monté sur l'élément chauffant (6), les deux éléments de transmission (14a, 14b) étant isolés galvaniquement l'un de l'autre et un couplage inductif et/ou capacitif étant prévu pour la transmission d'énergie.

2. Arrangement chauffant (4) selon la revendication précédente, **caractérisé en ce que** le deuxième élément de transmission (14b) est fabriqué dans un matériau ferromagnétique.

3. Arrangement chauffant (4) selon l'une des revendications précédentes, **caractérisé en ce que** le composant chauffant (8) est le deuxième élément de transmission (14b) et un chauffage par courant de Foucault est notamment réalisé.

4. Arrangement chauffant (4) selon l'une des revendications précédentes, **caractérisé en ce que** le deuxième élément de transmission (14b) est fabriqué dans un matériau qui est ferromagnétique au-dessous d'une température de basculement et paramagnétique au-dessus de cette température de basculement, la température de basculement étant réglable.

5. Arrangement chauffant (4) selon l'une des revendications précédentes, **caractérisé en ce que** la transmission d'énergie du premier élément de transmission (14a) au deuxième élément de transmission (14b) est dépendante de la température de l'élément chauffant (6).

6. Arrangement chauffant (4) selon l'une des revendications précédentes, **caractérisé en ce que** celui-ci possède une sonde de température (18) destinée à déterminer une température, le composant chauffant (8) étant la sonde de température (18).

7. Arrangement chauffant (4) selon l'une des revendications précédentes, **caractérisé en ce que** le premier élément de transmission (14a) est relié de manière électriquement conductrice à une source de courant alternatif (10).

8. Arrangement chauffant (4) selon l'une des revendications précédentes, **caractérisé en ce que** le composant chauffant (8) possède une structure multicouche avec une couche ferromagnétique à laquelle est adjacente au moins une couche métallique supplémentaire.

9. Arrangement chauffant (4) selon l'une des revendications précédentes, **caractérisé en ce que** le composant chauffant (8) possède un élément métallique plat, une pluralité de fils chauffants, une pluralité de particules chauffantes enrobées dans une matrice porteuse ou un film métallique plat ayant une épaisseur minimale de 1 µm et maximale de 100 µm.

10. Arrangement chauffant (4) selon l'une des revendications précédentes, **caractérisé en ce que** le composant chauffant (6) est à structure multicouche et le composant chauffant (8) est réalisé sous la forme d'une couche injectée par procédé thermique entre une couche de base et une couche de recouvrement (28, 30) de l'élément chauffant (6).

11. Arrangement chauffant (4) selon l'une des revendications précédentes, **caractérisé en ce que** celui-ci possède un dispositif de commande (2) pourvu d'une unité de commande centrale (4) destinée à délivrer un signal de commande (S) à l'élément chauffant (6), une unité de détection (10) comportant un capteur (12) destiné à détecter la valeur d'une grandeur de mesure qui caractérise l'état de l'élément chauffant (6) étant associée à l'élément chauffant (6) et l'unité de détection (10) possédant un module de communication (14A) pour une liaison de communication sans fil avec l'unité de commande centrale (4) et l'énergie destinée à faire fonctionner l'unité de détection (10) étant obtenue à partir de la liaison de communication.

12. Arrangement chauffant (4) selon la revendication 11, **caractérisé en ce que** le module de communication (14A) possède un élément RFID.

13. Arrangement chauffant (4) selon la revendication 11 ou 12, **caractérisé en ce que** l'unité de détection (10) possède un accumulateur d'énergie (16) servant au stockage temporaire de l'énergie obtenue à partir de la liaison de communication.

14. Arrangement chauffant (4) selon l'une des revendications 11 à 13, **caractérisé en ce que** l'unité de détection (10) est configurée pour l'interrogation discrète dans le temps de la grandeur de mesure et la liaison de communication n'est établie que pendant l'interrogation dans le temps.

15. Élément chauffant (6), à savoir un tapis de sol, pour un arrangement chauffant (4) selon l'une des revendications précédentes, lequel possède au moins un composant chauffant (8) destiné à produire de la chaleur ainsi qu'un deuxième élément de transmission (14b) qui peut être connecté à un premier élément de transmission (14a) pouvant être monté sur le véhicule automobile (2) en vue de la transmission d'énergie électrique du premier élément de transmission (14a) au deuxième élément de transmission (14b), les deux éléments de transmission (14a, 14b) étant isolés galvaniquement l'un de l'autre dans l'état monté du tapis de sol et un couplage inductif et/ou capacitif étant prévu pour la transmission d'énergie.
